# FASCICULE DE BREVET EUROPEEN

(11) **EP 1 605 668 B1**
(45) Date de publication et mention de la délivrance du brevet: **07.05.2014**
(21) Numéro de dépôt: 05291103.9
(22) Date de dépôt: 23.05.2005
(51) Int. Cl.: H04L 29/06, H04L 29/08

(54) **Procédé de chargement de fichiers depuis un client vers un serveur cible et dispositif pour la mise en oeuvre du procédé**
Verfahren zum Herunterladen von Dateien von einem Client nach einem gezielten Server und Vorrichtung zur Durchführung eines derartigen Verfahrens
Method for downloading files from a client to a target server and device for implementing such a method

(30) Priorité: 28.05.2004 FR 0405811
(43) Date de publication de la demande: 14.12.2005
(73) Titulaire: SAGEM DEFENSE SECURITE, 92100 Boulogne-Billancourt (FR)
(72) Inventeur: Benguigui, Laurent, 75015 Paris (FR)
(74) Mandataire: Cabinet Plasseraud

(56) Documents cités:
- US-A1- 2002 124 170
- ZHOU Y ET AL: "CDS: a code distribution scheme for active networks", COMPUTER COMMUNICATIONS, ELSEVIER SCIENCE PUBLISHERS BV, AMSTERDAM, NL, vol. 27, no. 3, 15 février 2004 (2004-02-15), pages 315-321, XP004488363, ISSN: 0140-3664

## Description

La présente invention concerne le chargement (ou téléchargement) de fichiers depuis un client vers un serveur cible. Elle concerne plus particulièrement le chargement d'applications vers des serveurs embarqués dans un moyen de transport aérien.

Des méthodes de chargement de fichiers vers des serveurs dits avioniques, c'est-à-dire des serveurs utilisés dans le cadre du fonctionnement d'un moyen de transport aérien tel qu'un avion, sont actuellement connues. Elles s'appuient sur des protocoles établis spécifiquement pour cet usage.

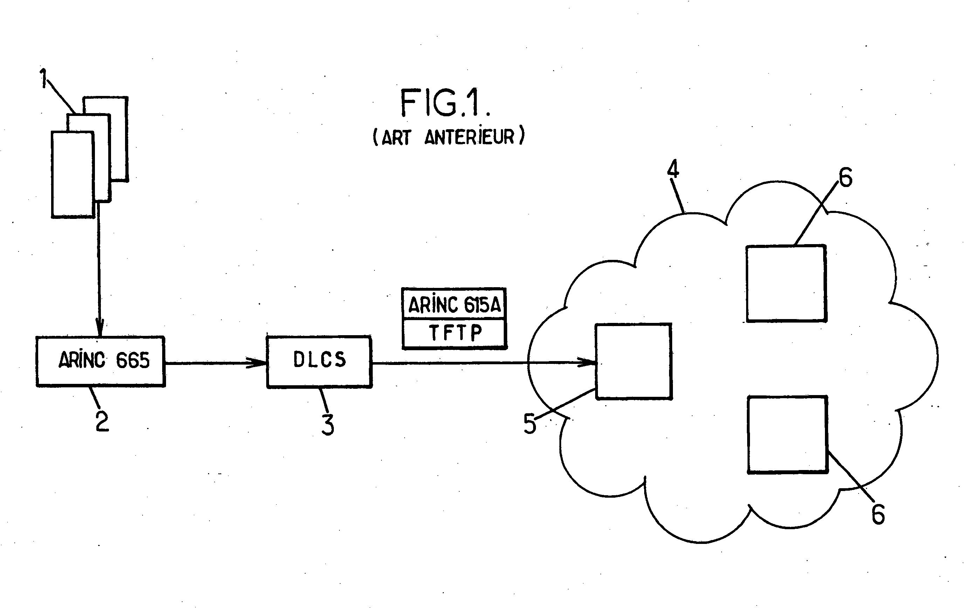

La figure 1 illustre un mode de chargement de fichiers selon une telle méthode de l'art antérieur. Un ensemble de fichiers 1 doit être chargé depuis un client vers un serveur 5 de type avionique parmi une pluralité de serveurs 5-6 d'un groupe 4. Les fichiers 1 sont par exemple l'ensemble des fichiers nécessaires à l'installation et à la mise en oeuvre d'une application informatique, c'est-à-dire par exemple des fichiers de données, des fichiers binaires et des fichiers de configuration associés.

Les fichiers 1 sont organisés de façon à obéir à un format prédéterminé. Ce format est typiquement celui qui est défini dans le standard ARINC 665, tel qu'établi et publié par l'AEEC (Airlines Electronic Engineering Committee). Ce format comprend essentiellement les fichiers à charger eux-mêmes, ainsi qu'un en-tête listant les différents fichiers à charger et incluant quelques informations simples en complément, telles qu'un champ de contrôle d'intégrité des données, sous la forme d'un code de redondance cyclique ou CRC (voir la section 4.0 du rapport ARINC 665) et un identifiant unique communément appelé PN ou "Part Number" (voir la section 2.1 du rapport ARINC 665).

L'ensemble de données 2 obtenu après mise au format des fichiers 1 est ensuite mis à disposition d'un client 3, par exemple via la lecture, au niveau du client, d'un support informatique sur lequel l'ensemble de données 2 a été enregistré. Le client 3 considéré est par exemple une application, c'est-à-dire un programme d'ordinateur, mise en oeuvre sur une machine et spécialisée dans le chargement de données vers des serveurs avioniques. Il est parfois désigné par l'acronyme DLCS ("Data Loading and Configuration System"). Il est en outre apte à offrir une interface homme-machine, qui permet notamment à un utilisateur de commander un téléchargement.

Par la suite, le client DLCS 3 effectue un chargement de l'ensemble de données 2 au format ARINC 665, à destination d'un serveur 5 choisi parmi le groupe de serveurs avioniques 5-6 du groupe 4. Pour ce faire, un protocole de communication spécifique est utilisé entre le client 3 et le serveur 5 : il s'agit du protocole ARINC 615A qui fait, lui aussi, l'objet d'un rapport établi et publié par l'organisme de standardisation AEEC.

Selon le protocole ARINC 615A, le DLCS 3 transmet l'en-tête de l'ensemble de données 2 au serveur 5 qui constitue la cible du chargement. Le serveur 5 analyse alors cet en-tête et en déduit la liste des fichiers à charger. Les fichiers contenus dans l'ensemble de données 2 au format ARINC 665 sont alors chargés vers le serveur 5 qui en vérifie l'intégrité à l'aide du champ de contrôle correspondant inclus dans l'en-tête préalablement transmis. Dans ce mode de communication, la cible, à savoir le serveur 5, est tour à tour client et serveur, puisqu'elle requiert le chargement des différents fichiers sur la base de la liste des fichiers dont elle dispose. De même, le client peut devenir serveur de fichiers, ce qui exclut l'utilisation de clients légers. Ce mode de fonctionnement rend en outre la communication lourde et relativement lente.

En outre, les échanges entre le DLCS 3 et le serveur 5 effectués selon le protocole de communication ARINC 615A utilisent le TFTP ("Trivial File Transfer Protocol") comme protocole de transfert (voir le rapport ARINC 615A, section 5.3.2). Le TFTP est notamment décrit dans la spécification technique RFC 1350, publiée en juillet 1992 par l'IETF ("Internet Engineering Task Force"). L'utilisation de ce protocole de transfert contribue aussi à faire que les échanges entre le DLCS 3 et le serveur 5 soient relativement lents.

Outre les chargements de fichiers vers des serveurs avioniques, en particulier pour la mise en oeuvre d'applications spécialisées, il peut être intéressant d'effectuer des chargements de fichiers vers d'autres types de serveurs, également embarqués mais non spécifiques au domaine avionique, par exemple des serveurs applicatifs courants (serveurs Web par exemple). De tels chargements de fichiers pourraient ainsi permettre la mise en oeuvre de nouveaux services au sein des transports aériens.

Or, l'utilisation d'une méthode de chargement utilisée dans un contexte avionique, telle que celle décrite plus haut en référence à la figure 1, ne serait pas satisfaisante à plusieurs titres dans un tel cadre. Tout d'abord, les serveurs courants vendus dans le commerce ne sont pas adaptés pour utiliser des protocoles avioniques, notamment le protocole ARINC 615A. En outre, même si ces serveurs étaient améliorés pour supporter le protocole de communication ARINC 615A, la situation ne serait pas optimale puisque ARINC 615A est adapté à des transferts de fichiers de petite taille se produisant dans un environnement déjà largement sécurisé, ce qui n'est pas toujours le cas pour des applications non spécialisées.

Par ailleurs, il n'existe pas de protocole standard pour le téléchargement de données lorsqu'on sort du contexte spécifique de l'avionique, c'est-à-dire dans ce qu'on appelle parfois le "monde ouvert". En effet, il existe de multiples protocoles de communication entre deux entités de communication, ainsi qu'une multitude de formats de fichiers différents et un grand nombre de protocoles de transfert et de transport (HTTP, FTP, UDP, etc.). Il en résulte une grande difficulté pour mettre en oeuvre une solution uniforme de téléchargement.

En outre, l'utilisation des formats de fichiers du "monde ouvert" n'autorise pas la compatibilité avec les outils de téléchargement utilisés dans le domaine avionique, ce qui obligerait à avoir deux gammes d'outils de téléchargement : une première pour charger des applications spécifiques vers des serveurs avioniques et une seconde pour charger des applications non spécialisées vers des serveurs courants.

Par ailleurs, un téléchargement de fichiers vers un serveur embarqué selon un protocole du "monde ouvert" pose des problèmes de sécurité, puisqu'il ne garantit pas l'authenticité des fichiers téléchargés, ni la cohérence des fichiers en cas de chargements simultanés sur une même cible.

Un but de la présente invention est de pallier les inconvénients susmentionnés.

Un autre but de l'invention est de permettre un chargement de fichiers rapide, sécurisé et authentifié vers des serveurs courants, éventuellement suivi de l'installation d'une application à partir des fichiers chargés.

Un autre but encore de l'invention est de préserver un certain degré de compatibilité avec les outils de téléchargement utilisés dans le domaine avionique.

L'invention propose ainsi un procédé de chargement de fichiers depuis un client vers au moins un serveur cible, comprenant les étapes suivantes :
- transmettre, depuis le client vers le serveur cible, un ensemble de données obtenu à partir desdits fichiers à charger, certaines au moins des données dudit ensemble étant codées ;
- requérir, depuis le client, une vérification d'authenticité, par le serveur cible, des données dudit ensemble à partir de certaines au moins desdites données codées ; et
- lorsque l'authenticité des données dudit ensemble a été vérifiée avec succès par le serveur cible, charger lesdits fichiers selon un format prédéterminé depuis le client vers le serveur cible.

Des contrôles d'intégrité des données reçues au serveur peuvent en outre être effectués à la réception dudit ensemble de données par le serveur cible.

De façon avantageuse, les fichiers considérés sont l'ensemble des fichiers nécessaires à l'installation et à la mise en oeuvre d'une application. Dans ce cas, une requête d'installation est en outre avantageusement transmise par le client à destination du serveur cible.

Certains au moins des serveurs du groupe de serveurs sont avantageusement des serveurs du "monde ouvert", c'est-à-dire des serveurs courants, non spécialisés comme le sont les serveurs avioniques. Certains au moins des serveurs peuvent être embarqués dans un moyen de transport aérien, tel qu'un avion par exemple.

Le client à l'origine du chargement peut en outre être apte à charger des fichiers vers des serveurs avioniques. Cela assure un certain niveau de compatibilité des outils de chargement entre les deux mondes "ouvert" et "avionique".

Dans le même but, les fichiers sont avantageusement chargés selon un format utilisé dans le domaine avionique, tel que l'ARINC 665.

En revanche, le protocole de transfert utilisé pour le chargement est de préférence un protocole standard, comme HTTPS, et non un protocole du domaine avionique.

L'invention propose en outre un dispositif agencé pour effectuer un chargement de fichiers vers au moins un serveur cible, comprenant :
- des moyens pour transmettre vers le serveur cible un ensemble de données obtenu à partir desdits fichiers à charger, certaines au moins des données dudit ensemble étant codées ;
- des moyens pour requérir une vérification d'authenticité, par le serveur cible, des données dudit ensemble à partir de certaines au moins desdites données codées ; et
- des moyens pour, lorsque l'authenticité des données dudit ensemble a été vérifiée avec succès par le serveur cible, charger lesdits fichiers vers le serveur cible selon un format prédéterminé.

Le dispositif en question est une machine cliente dans sa relation avec le serveur cible.

L'invention propose également un produit programme d'ordinateur à installer sur un dispositif, comprenant des instructions pour mettre en oeuvre les étapes suivantes, lors d'une exécution du programme par une unité de traitement dudit dispositif :
- transmettre, depuis le client vers le serveur cible, un ensemble de données obtenu à partir desdits fichiers à charger, certaines au moins des données dudit ensemble étant codées ;
- requérir, depuis le client, une vérification d'authenticité, par le serveur cible, des données dudit ensemble à partir de certaines au moins desdites données codées ; et
- lorsque l'authenticité des données dudit ensemble a été vérifiée avec succès par le serveur cible, charger lesdits fichiers selon un format prédéterminé depuis le client vers le serveur cible.

D'autres particularités et avantages de la présente invention apparaîtront dans la description ci-après d'exemples de réalisation non limitatifs, en référence aux dessins annexés, dans lesquels :
- la figure 1, déjà commentée, est un schéma illustrant un mode de téléchargement de fichiers vers des serveurs avioniques selon une méthode de l'art antérieur ;
- la figure 2 est un schéma illustrant un mode de téléchargement de fichiers vers des serveurs du "monde ouvert" selon l'invention ;
- la figure 3 est un diagramme illustrant les principaux échanges mis en oeuvre dans le cadre d'un téléchargement de fichiers selon l'invention ; et
- la figure 4 est un schéma illustrant un format avantageux d'un en-tête sécurisé utilisé dans le cadre d'un téléchargement de fichiers selon l'invention.

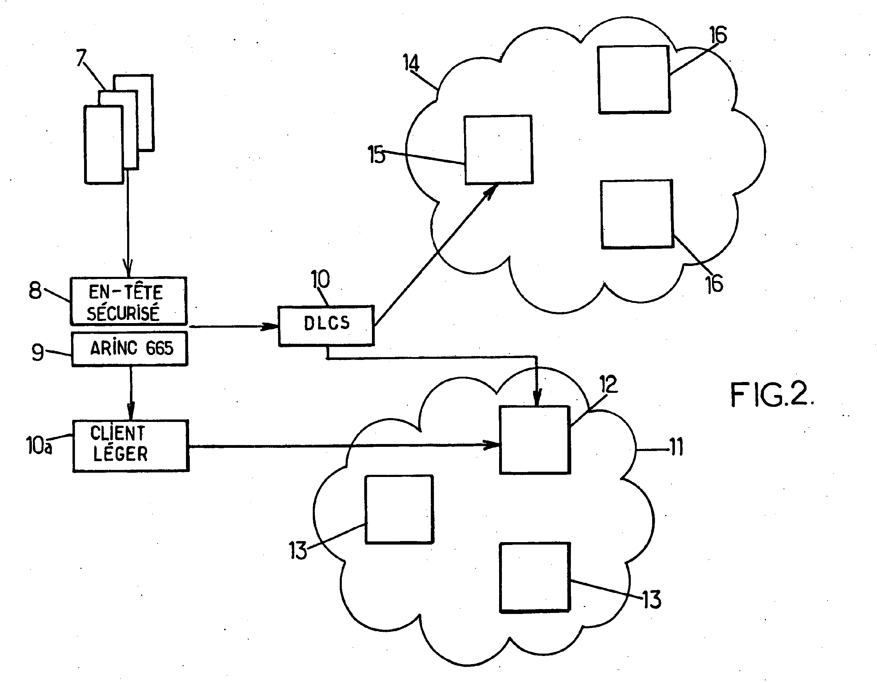

La figure 2 schématise une architecture d'un système apte à mettre en oeuvre un chargement de fichiers selon l'invention. Ce système comprend notamment un groupe 11 de serveurs du "monde ouvert" 12-13, c'est-à-dire de serveurs courants non avioniques, ainsi qu'un groupe 14 de serveurs avioniques 15-16. Il comprend en outre un client 10 qui s'appuie sur une application DLCS comme décrite en introduction, ainsi qu'un client léger 10a qui n'est pas spécifique au domaine avionique tel qu'un navigateur Web par exemple. Le client considéré peut être une machine, ou bien une application, c'est-à-dire un programme d'ordinateur, installée sur une telle machine.

On s'intéresse ci-après à un téléchargement de fichiers depuis un client vers un serveur cible 12 du groupe 11 de serveurs courants 12-13. Les fichiers 7 à charger sont par exemple l'ensemble des fichiers nécessaires à la définition et à l'installation d'une application donnée.

Selon l'invention, un ensemble de données est constitué à partir des fichiers 7 à charger vers le serveur 12. Cet ensemble de données 8 est appelé "en-tête sécurisé" par la suite. Il comprend des données relatives aux fichiers 7 à charger, ainsi que des données codées dérivées des fichiers à charger en vue d'assurer une authenticité et une intégrité des données transmises.

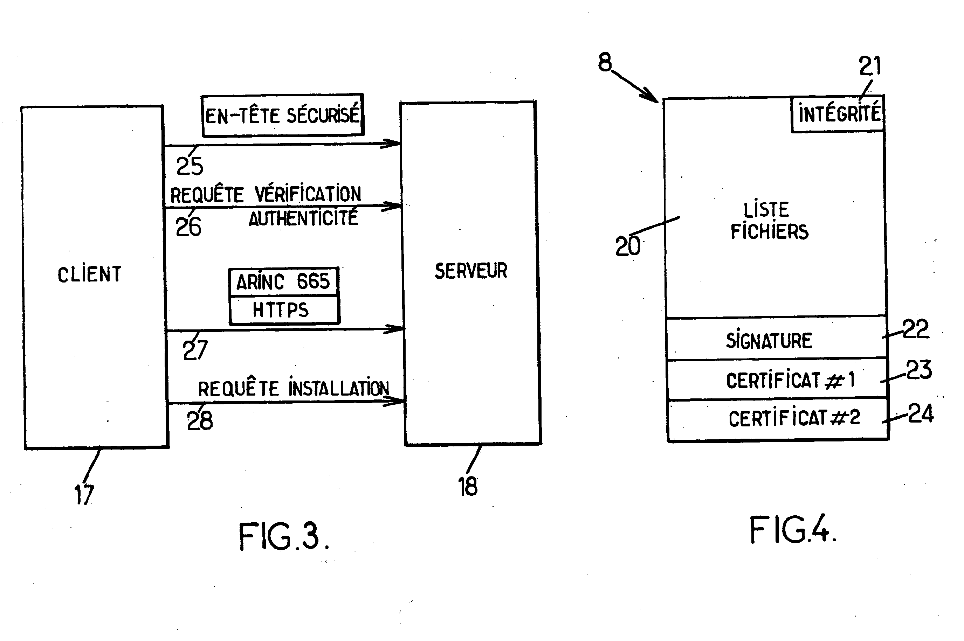

La figure 4 montre un exemple de format pour un tel en-tête sécurisé 8. Ce dernier comprend une liste des fichiers 7 à charger dans une partie 20 de l'en-tête sécurisé. Il comprend aussi avantageusement au moins un champ 21 de contrôle d'intégrité des données contenues dans l'en-tête sécurisé, par exemple sous la forme d'un code de redondance cyclique ou CRC calculé à partir de la liste de fichiers présente dans la partie 20 de l'en-tête. Le champ de contrôle d'intégrité 21 permet au destinataire de l'en-tête sécurisé 8 de vérifier, d'une façon connue en soi, que les données reçues dans cet en-tête sont bien conformes à ce qui a été transmis.

En outre, l'en-tête sécurisé 8 contient une signature 22 obtenue par exemple par hachage de la liste des fichiers de la partie 20 et du champ de contrôle 21 (le hachage est une opération de codage connue en soi consistant à calculer une suite binaire de taille restreinte à partir d'un contenu numérique plus important). La signature est par ailleurs chiffrée à l'aide d'une clé privée. Lorsque l'en-tête sécurisé 8 est reçu par son destinataire, ce dernier peut alors déchiffrer la signature 22 à l'aide d'une clé publique, d'une façon connue en soi. Il effectue de plus le même hachage des données de l'en-tête sécurisé 8 reçu que celui utilisé pour générer la signature 22, à des fins de vérification de celle-ci. On vérifie ainsi l'authenticité de l'en-tête sécurisé 8.

Enfin, l'en-tête sécurisé 8 de l'exemple illustré sur la figure 4 peut contenir une série de certificats 23-24 relatifs à des autorités de certification respectives. Ces certificats incluent la clé publique utilisée pour déchiffrer la signature 22. La figure 4 montre deux certificats, mais il est bien clair qu'un seul certificat ou bien un nombre de certificats supérieur à deux pourrait être utilisé. La vérification de ces certificats par le destinataire de l'en-tête sécurisé 8, de façon connue en soi, permet de garantir l'authenticité de la signature 22 et donc de s'assurer de l'authenticité de l'en-tête sécurisé 8.

Par ailleurs, les données des fichiers 7 à charger sont organisées de façon à obéir à un format prédéterminé. De façon avantageuse, ce format est le même que celui utilisé dans le domaine avionique, à savoir l'ARINC 665 tel que mentionné en introduction. Il en résulte un ensemble de données 9 au format ARINC 665.

Un client, qui peut être le client DLCS 10 ou bien le client léger 10a, peut alors effectuer le chargement des fichiers 7 vers le serveur cible 12. A cet effet, il dispose de l'en-tête sécurisé 8 et de l'ensemble de données 9 au format ARINC 665 mentionnés plus haut. La mise à disposition de ces éléments au niveau du client peut résulter par exemple de la lecture, par le client, d'un support informatique sur lequel ces éléments ont été préalablement enregistrés. En variante, elle peut résulter d'une transmission informatique. En variante encore, l'en-tête sécurisé 8 et l'ensemble de données 9 au format ARINC 665 peuvent être générés directement au niveau du client considéré ou du moins au niveau de la machine sur laquelle le client est installé.

Un mode de chargement des fichiers 7 depuis le client vers le serveur selon l'invention est décrit ci-après en référence à la figure 3. Le client 17 de la figure 3 peut par exemple être le client 10 ou le client 10a de la figure 2, tandis que le serveur 18 de la figure 3 peut par exemple être le serveur 12 de la figure 2.

Dans un premier temps, le client 17 transmet l'en-tête sécurisé 8 au serveur 18, cet en-tête sécurisé étant avantageusement de la forme décrite plus haut en référence à la figure 4 (étape 25). L'en-tête sécurisé est ainsi chargé au niveau du serveur 18, par exemple dans un répertoire temporaire.

Ensuite, le client 17 envoie une requête de vérification d'authenticité au serveur 18 (étape 26), pour que ce dernier vérifie les certificats inclus dans l'en-tête sécurisé 8 préalablement chargé. A la réception de cette requête, le serveur 18 vérifie alors les certificats. Si ces derniers sont valides, c'est-à-dire s'ils sont bien issus d'autorités de certification habilitées et sont en vigueur, le serveur crée alors avantageusement un répertoire dédié pour recevoir les fichiers à charger. Dans le cas contraire, aucun répertoire dédié n'est créé par le serveur 18, si bien que le chargement ne pourra avoir lieu. On garantit ainsi que les fichiers ne seront chargés que lorsque l'authenticité des données de l'en-tête sécurisé 8 aura été vérifiée avec succès.

Lorsque la vérification de l'authenticité des données a eu lieu avec succès, le client 17 transmet alors l'ensemble de données 9 généré à partir des fichiers à charger, ledit ensemble étant au format ARINC 665 (étape 27). L'ensemble de données 9 est ainsi chargé vers le serveur cible 12, par exemple dans le répertoire dédié créé à l'étape précédente. Cela permet d'assurer une cohérence en cas de chargements simultanés de fichiers vers un même serveur cible, chacun des ensembles de fichiers chargés étant placé dans un répertoire distinct, par exemple sur la base du PN correspondant. Après réception de cet ensemble de données 9, le serveur 12 dispose alors de tous les fichiers 7. Il peut alors vérifier que tous les fichiers 7 annoncés dans l'en-tête sécurisé ont bien été reçus. Il peut en outre vérifier l'intégrité des données correspondantes.

Lorsque les fichiers 7 sont relatifs à une application, le client 17 peut ensuite transmettre au serveur 18 une requête d'installation (étape 28). A la réception de cette requête, le serveur exécute un script d'installation contenu dans les fichiers précédemment chargés. De façon avantageuse, le serveur 18 déplace les fichiers 7 reçus dans un répertoire final avant d'effectuer l'installation de l'application. Le résultat de l'installation est enfin renvoyé au client 17.

Au niveau transfert, les échanges entre le client 17 et le serveur 18 sont avantageusement réalisés grâce au protocole HTTP ("Hyper Text Transfer Protocol") sécurisé, autrement désigné par HTTPS, c'est-à-dire le protocole HTTP adapté pour supporter le protocole standardisé SSL ("Secure Socket Layer"). Le protocole de transfert HTTPS est un protocole largement utilisé dans le "monde ouvert", ce qui assure une interopérabilité avec la plupart des logiciels et équipements. Il a de plus l'avantage d'offrir un certain niveau de sécurité au transfert des données. En particulier, il permet d'authentifier le client 17 à l'origine du chargement. Ce protocole est utilisé notamment pour chacune des transmissions illustrées sur la figure 3. Bien sûr, tout autre protocole de niveau transfert peut être utilisé en remplacement de HTTPS pour le transfert des échanges entre le client 17 et le serveur 18.

Dans le mode d'échanges de données décrit ci-dessus en référence à la figure 3, le serveur 18 est donc toujours utilisé en tant que serveur, et ne devient pas client en cours de chargement des fichiers, ce qui présente un avantage par rapport à la solution de chargement utilisée dans le domaine avionique décrite en introduction. Il en résulte ainsi une rapidité et une simplification accrues des échanges entre client et serveur selon l'invention.

On notera que l'utilisation du format de fichiers ARINC 665 pour le chargement des fichiers vers des serveurs du "monde ouvert" présente l'intérêt de permettre une réutilisation des outils de téléchargement utilisés dans le domaine avionique. En effet, le client 10 de la figure 2 par exemple est un DLCS qui autorise un chargement de fichiers vers des serveurs 15-16 du groupe 14 de serveurs avioniques. Ce même DLCS peut être utilisé pour télécharger les fichiers 7 vers un serveur 12 du groupe 11 de serveurs courants du "monde ouvert" selon les principes décrits plus haut. En outre la simplicité du protocole ARINC 665 permet aux serveurs 12-13 de recevoir les fichiers chargés selon l'invention, sans qu'un développement particulier soit nécessaire au niveau de ces serveurs, puisque ce format consiste essentiellement en une succession des fichiers à charger, à un en-tête supplémentaire près.

Grâce à cet agencement, on peut utiliser la même interface homme-machine, à savoir celle du client DLCS, pour télécharger des applications vers un serveur avionique et vers un serveur du "monde ouvert". Il est également possible d'utiliser l'interface simple d'un client léger, comme le client 10a de la figure 2. On peut encore se passer d'une interface homme-machine.

On comprend ainsi que l'agencement décrit en référence aux figures 2-4 permet de mettre en oeuvre un chargement de fichiers vers des serveurs du "monde ouvert" qui soit sécurisé, relativement rapide et contrôlé depuis une machine cliente. En outre, l'utilisation d'un en-tête sécurisé en amont du chargement des données sous format ARINC 665 assure l'authenticité des fichiers chargés. Enfin, cet agencement permet un niveau de compatibilité appréciable avec les outils de téléchargement du domaine avionique.

Dans un autre mode de réalisation de l'invention, le client 17 ne charge pas directement certains des fichiers, mais il transmet, en remplacement, au serveur 18, une adresse à laquelle ces fichiers sont disponibles, par exemple une adresse HTTP. A cet effet, un serveur HTTP est disponible depuis la cible. Le serveur 18, sur réception de l'adresse HTTP, récupère alors les fichiers à l'adresse indiquée.

## Revendications

1. Procédé de chargement de fichiers (7) depuis un client (10, 10a, 17) vers au moins un serveur cible (12, 18), le procédé comprenant l'étape suivante:
- transmettre, depuis le client vers le serveur cible, un ensemble de données (8) obtenu à partir desdits fichiers à charger, certaines (21, 22, 23, 24) au moins des données dudit ensemble étant codées ;
ledit procédé étant **caractérisé par** les étapes suivantes :
- requérir, depuis le client, une vérification d'authenticité, par le serveur cible, des données dudit ensemble à partir de certaines (22, 23, 24) au moins desdites données codées ; et
- lorsque l'authenticité des données dudit ensemble a été vérifiée avec succès par le serveur cible, charger lesdits fichiers selon un format prédéterminé depuis le client vers le serveur cible.

2. Procédé selon la revendication 1, comprenant en outre une étape de vérification, par le serveur cible, que tous les fichiers à charger ont bien été chargés au serveur cible, ladite vérification étant effectuée à partir dudit ensemble de données (8) préalablement transmis.

3. Procédé selon la revendication 1 ou 2, comprenant en outre une étape de vérification, par le serveur cible, d'une intégrité des fichiers chargés au serveur cible, ladite vérification étant effectuée à partir dudit ensemble de données (8) préalablement transmis.

4. Procédé selon l'une quelconque des revendications précédentes, dans lequel, après avoir été transmis depuis le client, ledit ensemble de données (8) est mémorisé dans un répertoire temporaire au niveau du serveur cible, dans lequel, lorsque l'authenticité des données dudit ensemble a été vérifiée avec succès par le serveur cible, on crée un répertoire dédié, et dans lequel les fichiers (7) sont chargés dans ledit répertoire dédié.

5. Procédé selon l'une quelconque des revendications précédentes, comprenant en outre une étape de transmission (28), depuis le client vers le serveur cible, d'une requête d'installation d'une application associée auxdits fichiers chargés au serveur cible.

6. Procédé selon l'une quelconque des revendications précédentes, dans lequel le client est en outre apte à charger des fichiers vers des serveurs (15-16) de type avionique.

7. Procédé selon l'une quelconque des revendications précédentes, dans lequel ledit format prédéterminé selon lequel les fichiers sont chargés depuis le client vers le serveur cible est conforme à un protocole utilisé par des équipements de communication de type avionique, en particulier le protocole ARINC 665.

8. Procédé selon l'une quelconque des revendications précédentes, dans lequel le chargement desdits fichiers depuis le client vers le serveur cible est mis en oeuvre selon un protocole de transfert standard, tel que le protocole sécurisé HTTPS.

9. Procédé selon l'une quelconque des revendications précédentes, dans lequel le serveur cible est un serveur embarqué dans un moyen de transport aérien.

10. Procédé selon l'une quelconque des revendications précédentes, dans lequel une adresse à laquelle au moins un fichier parmi lesdits fichiers est disponible est transmise depuis le client vers le serveur cible en remplacement du chargement dudit fichier, et dans lequel le serveur cible est agencé pour obtenir ledit fichier depuis l'adresse transmise.

11. Dispositif (10, 10a, 17) agencé pour effectuer un chargement de fichiers (7) vers au moins un serveur cible (12, 18), comprenant :
- des moyens pour transmettre vers le serveur cible un ensemble de données (8) obtenu à partir desdits fichiers à charger, certaines (21, 22, 23, 24) au moins des données dudit ensemble étant codées ;
ledit dispositif étant **caractérisé par**:
- des moyens pour requérir une vérification d'authenticité, par le serveur cible, des données dudit ensemble à partir de certaines (22, 23, 24) au moins desdites données codées ; et
- des moyens pour, lorsque l'authenticité des données dudit ensemble a été vérifiée avec succès par le serveur cible, charger lesdits fichiers vers le serveur cible selon un format prédéterminé.

12. Dispositif (10, 10a, 17) selon la revendication 11, comprenant en outre des moyens pour transmettre vers le serveur cible une requête d'installation d'une application associée auxdits fichiers.

13. Dispositif (10, 10a, 17) selon la revendication 11 ou 12, comprenant en outre des moyens pour charger des fichiers vers des serveurs (15-16) de type avionique.

14. Dispositif (10, 10a, 17) selon l'une quelconque des revendications 11 à 13, dans lequel ledit format prédéterminé selon lequel les fichiers sont chargés vers le serveur cible est conforme à un protocole utilisé par des équipements de communication de type avionique, en particulier le protocole ARINC 665.

15. Dispositif (10, 10a, 17) selon l'une quelconque des revendications 11 à 14, dans lequel les moyens pour charger lesdits fichiers vers le serveur cible selon un format prédéterminé utilisent un protocole de transfert standard, tel que le protocole sécurisé HTTPS.

16. Dispositif (10, 10a, 17) selon l'une quelconque des revendications 11 à 15, comprenant des moyens pour transmettre vers le serveur cible une adresse à laquelle au moins un fichier parmi lesdits fichiers est disponible, en remplacement des moyens pour charger ledit fichier.

17. Produit programmé d'ordinateur à installer sur un dispositif, comprenant des instructions pour mettre en oeuvre l'étape suivante, lors d'une exécution du programme par une unité de traitement dudit dispositif :
- transmettre, depuis le client vers le serveur cible, un ensemble de données (8) obtenu à partir desdits fichiers à charger, certaines (21, 22, 23, 24) au moins des données dudit ensemble étant codées ;
ledit produit programme étant **caractérisé en ce qu'**il comprend des instructions pour mettre en oeuvre les étapes supplémentaires :
- requérir, depuis le client, une vérification d'authenticité, par le serveur cible, des données dudit ensemble à partir de certaines (22, 23, 24) au moins desdites données codées ; et
- lorsque l'authenticité des données dudit ensemble a été vérifiée avec succès par le serveur cible, charger lesdits fichiers selon un format prédéterminé depuis le client vers le serveur cible.

18. Produit programme d'ordinateur selon la revendication 17, comprenant en outre des instructions pour mettre en oeuvre une étape de transmission (28), vers le serveur cible, d'une requête d'installation d'une application associée auxdits fichiers.

19. Produit programme d'ordinateur selon la revendication 17 ou 18, comprenant en outre des instructions pour mettre en oeuvre un chargement de fichiers vers des serveurs (15-16) de type avionique.

20. Produit programme d'ordinateur selon l'une quelconque des revendications 17 à 19, dans lequel ledit format prédéterminé selon lequel les fichiers sont chargés vers le serveur cible est conforme à un protocole utilisé par des équipements de communication de type avionique, en particulier le protocole ARINC 665.

21. Produit programme d'ordinateur selon l'une quelconque des revendications 17 à 20, dans lequel le chargement desdits fichiers vers le serveur cible selon un format prédéterminé utilise un protocole de transfert standard, tel que le protocole sécurisé HTTPS.

22. Produit programme d'ordinateur selon l'une quelconque des revendications 17 à 21, dans lequel on transmet vers le serveur cible une adresse à laquelle au moins un fichier parmi lesdits fichiers est disponible, en remplacement du chargement dudit fichier.

## Patentansprüche

1. Verfahren zum Laden von Dateien (7) von einem Client (10, 10a, 17) in wenigstens einen Ziel-Server (12, 18), wobei das Verfahren den folgenden Schritt umfasst:
- Senden einer Gesamtheit von Daten (8), die anhand der zu ladenden Dateien erhalten werden, von dem Client zu dem Ziel-Server, wobei wenigstens Bestimmte (21, 22, 23, 24) der Daten der Gesamtheit codiert sind;
wobei das Verfahren **gekennzeichnet ist durch** die folgenden Schritte:
- Anfordern von dem Client einer Echtheitsprüfung durch den Ziel-Server der Daten der Gesamtheit anhand wenigstens Bestimmter (22, 23, 24) der codierten Daten; und
- dann, wenn die Echtheit der Daten der Gesamtheit **durch** den Ziel-Server erfolgreich verifiziert worden ist, Laden dieser Dateien in einem vorgegebenen Format von dem Client in den Ziel-Server.

2. Verfahren nach Anspruch 1, das außerdem einen Schritt des Prüfens durch den Ziel-Server umfasst, dass die zu ladenden Dateien ordnungsgemäß in den Ziel-Server geladen worden sind, wobei die Prüfung anhand der vorher gesendeten Gesamtheit von Daten (8) erfolgt.

3. Verfahren nach Anspruch 1 oder 2, das außerdem einen Schritt des Prüfens durch den Ziel-Server einer Integrität der in den Ziel-Server geladenen Dateien umfasst, wobei die Prüfung anhand der vorher gesendeten Gesamtheit von Daten (8) erfolgt.

4. Verfahren nach einem der vorhergehenden Ansprüche, wobei die Gesamtheit von Daten (8), nachdem sie von dem Client gesendet worden ist, in einen temporären Speicher auf Seiten des Ziel-Servers gespeichert wird, in dem dann, wenn die Echtheit der Daten der Gesamtheit erfolgreich durch den Ziel-Server geprüft worden ist, ein dedizierter Speicher erzeugt wird und wobei die Daten (7) in den dedizierten Speicher geladen werden.

5. Verfahren nach einem der vorhergehenden Ansprüche, das außerdem einen Schritt (28) des Sendens von dem Client zu dem Ziel-Server einer Anforderung zum Installieren einer Anwendung, die den in den Ziel-Server geladenen Dateien zugeordnet ist, umfasst.

6. Verfahren nach einem der vorhergehenden Ansprüche, wobei der Client außerdem Daten in Server (15-16) des luftfahrtelektronischen Typs laden kann.

7. Verfahren nach einem der vorhergehenden Ansprüche, wobei das vorgegebene Format, in dem die Daten von dem Client in den Ziel-Server geladen werden, in Übereinstimmung mit einem Protokoll ist, das von Kommunikationsanlagen des luftfahrtelektronischen Typs verwendet wird, insbesondere das Protokoll ARINC 665.

8. Verfahren nach einem der vorhergehenden Ansprüche, wobei das Laden der Dateien von dem Client in den Ziel-Server gemäß einem Standard-Übertragungsprotokoll wie etwa dem gesicherten Protokoll HTTPS erfolgt.

9. Verfahren nach einem der vorhergehenden Ansprüche, wobei der Ziel-Server ein Server an Bord eines Lufttransportmittels ist.

10. Verfahren nach einem der vorhergehenden Ansprüche, wobei eine Adresse, an der wenigstens eine Datei unter den Dateien verfügbar ist, von dem Client zu dem Ziel-Server gesendet wird, was das Laden der Datei ersetzt, und wobei der Ziel-Server dafür ausgelegt ist, die Datei anhand der gesendeten Adresse zu erhalten.

11. Vorrichtung (10, 10a, 17), die dafür ausgelegt ist, ein Laden von Dateien (7) in wenigstens einen Ziel-Server (12, 18) auszuführen, die Folgendes umfasst:
- Mittel zum Senden einer Gesamtheit von Daten (8), die anhand der zu ladenden Dateien erhalten wird, zu dem Ziel-Server, wobei wenigstens Bestimmte (21, 22, 23, 24) der Daten der Gesamtheit codiert sind;
wobei die Vorrichtung **gekennzeichnet ist durch**:
- Mittel, um eine Prüfung der Echtheit **durch** den Ziel-Server der Daten der Gesamtheit wenigstens anhand Bestimmter (22, 23, 24) der codierten Daten anzufordern; und
- Mittel, um dann, wenn die Echtheit der Daten der Gesamtheit **durch** den Ziel-Server erfolgreich geprüft worden ist, die Dateien in einem vorgegebenen Format in den Ziel-Server zu laden.

12. Vorrichtung (10, 10a, 17) nach Anspruch 11, die außerdem Mittel umfasst, um eine Anforderung zum Installieren einer Anwendung, die den Dateien zugeordnet ist, zu dem Ziel-Server zu senden.

13. Vorrichtung (10, 10a, 17) nach Anspruch 11 oder 12, die außerdem Mittel umfasst, um Dateien in Server (15-16) des luftfahrtelektronischen Typs zu laden.

14. Vorrichtung (10, 10a, 17) nach einem der Ansprüche 11 bis 13, wobei das vorgegebene Format, in dem die Dateien in den Ziel-Server geladen werden, mit einem Protokoll in Übereinstimmung ist, das von Kommunikationsanlagen des luftfahrtelektronischen Typs verwendet wird, insbesondere das Protokoll ARINC 665.

15. Vorrichtung (10, 10a, 17) nach einem der Ansprüche 11 bis 14, wobei die Mittel zum Laden der Dateien in den Ziel-Server in einem vorgegebenen Format ein Standardübertragungsprotokoll wie etwa das gesicherte Protokoll HTTPS verwenden.

16. Vorrichtung (10, 10a, 17) nach einem der Ansprüche 11 bis 15, die Mittel umfasst, um eine Adresse, an der wenigstens eine Datei unter den Dateien verfügbar ist, zu dem Ziel-Server zu senden, die die Mittel zum Laden der Datei ersetzen.

17. Computerprogrammprodukt, das in einer Vorrichtung zu installieren ist und das Befehle enthält, um dann, wenn das Programm von einer Verarbeitungseinheit der Vorrichtung ausgeführt wird, den folgenden Schritt auszuführen,:
- Senden von dem Client zu dem Ziel-Server einer Gesamtheit von Daten (8), die anhand der zu ladenden Dateien erhalten werden, wobei wenigstens Bestimmte (21, 22, 23, 24) der Daten der Gesamtheit codiert sind;
wobei das Programmprodukt **dadurch gekennzeichnet ist, dass** es Befehle umfasst, um die folgenden weiteren Schritte auszuführen:
- Anfordern von dem Client einer Echtheitsprüfung durch den Ziel-Server der Daten der Gesamtheit anhand wenigstens Bestimmter (22, 23, 24) der codierten Daten; und
- dann, wenn die Echtheit der Daten der Gesamtheit durch den Ziel-Server erfolgreich geprüft worden ist, Laden der Dateien in einem vorgegebenen Format von dem Client in den Ziel-Server.

18. Computerprogrammprodukt nach Anspruch 17, das außerdem Befehle umfasst, um einen Schritt des Sendens (28) zu dem Ziel-Server einer Anforderung zum Installieren einer Anwendung, die den Dateien zugeordnet ist, auszuführen.

19. Computerprogrammprodukt nach Anspruch 17 oder 18, das außerdem Befehle umfasst, um ein Laden von Dateien in Server (15-16) des luftfahrtelektronischen Typs auszuführen.

20. Computerprogrammprodukt nach den Ansprüchen 17 bis 19, wobei das vorgegebene Format, in dem die Dateien in den Ziel-Server geladen werden, mit einem Protokoll in Übereinstimmung ist, das von Kommunikationsanlagen des luftfahrtelektronischen Typs verwendet wird, insbesondere das Protokoll ARINC 665.

21. Computerprogrammprodukt nach einem der Ansprüche 17 bis 20, wobei das Laden der Dateien in den Ziel-Server in einem vorgegebenen Format ein Standardübertragungsprotokoll wie etwa das gesicherte Protokoll HTTPS verwendet.

22. Computerprogrammprodukt nach einem der Ansprüche 17 bis 21, wobei eine Adresse, an der wenigstens eine Datei unter den Dateien verfügbar ist, zu dem Ziel-Server gesendet wird, was das Laden der Datei ersetzt.

## Claims

1. Method of loading files (7) from a client (10, 10a, 17) to at least one target server (12, 18), the method comprising the following step:
- transmitting, from the client to the target server, a set of data (8) obtained from said files to be loaded, at least some (21, 22, 23, 24) of the data of said set being encoded;
said method being **characterized by** the following steps:
- requesting, from the client, an authenticity check, by the target server, on the data of said set from at least some (22, 23, 24) of said encoded data; and
- when the authenticity of the data of said set has been checked successfully by the target server, loading said files according to a predetermined format from the client to the target server.

2. Method according to Claim 1, further comprising a step for checking, by the target server, that all the files to be loaded have indeed been loaded on the target server, said check being performed from said set of data (8) previously transmitted.

3. Method according to Claim 1 or 2, further comprising a step for checking, by the target server, the integrity of the files loaded on the target server, said check being performed from said set of data (8) previously transmitted.

4. Method according to anyone of the preceding claims, in which, after having been transmitted from the client, said set of data (8) is stored in a temporary directory on the target server, in which, when the authenticity of the data of said set has been checked successfully by the target server, a dedicated directory is created, and in which the files (7) are loaded into said dedicated directory.

5. Method according to anyone of the preceding claims, further comprising a step for transmitting (28), from the client to the target server, a request to install an application associated with said files loaded on the target server.

6. Method according to anyone of the preceding claims, in which the client is further suited to loading the files to avionics type servers (15-16).

7. Method according to anyone of the preceding claims, in which said predetermined format according to which the files are loaded from the client to the target server conforms to a protocol used by avionics type communication equipment, in particular the ARINC 665 protocol.

8. Method according to anyone of the preceding claims, in which the loading of said files from the client to the target server is carried out according to a standard transfer protocol, such as the secured HTTPS protocol.

9. Method according to anyone of the preceding claims, in which the target server is a server on board an air transport means.

10. Method according to anyone of the preceding claims, in which an address at which at least one of said files is available is transmitted from the client to the target server instead of the loading of said file, and in which the target server is organized to obtain said file from the address transmitted.

11. Device (10, 10a, 17) organized to load files (7) to at least one target server (12, 18), comprising:
- means for transmitting to the target server a set of data (8) obtained from said files to be loaded, at least some (21, 22, 23, 24) of the data of said set being encoded;
said device being **characterized by**:
- means for requesting an authenticity check, by the target server, on the data of said set from at least some (22, 23, 24) of said encoded data; and
- means, when the authenticity of the data of said set has been checked successfully by the target server, for loading said files to the target server according to a predetermined format.

12. Device (10, 10a, 17) according to Claim 11, further comprising means for transmitting to the target server a request to install an application associated with said files.

13. Device (10, 10a, 17) according to Claim 11 or 12, further comprising means for loading files to avionics type servers (15-16).

14. Device (10, 10a, 17) according to anyone of claims 11 to 13, in which said predetermined format according to which the files are loaded to the target server conforms to a protocol used by avionics type communication equipment, in particular the ARINC 665 protocol.

15. Device (10, 10a, 17) according to anyone of claims 11 to 14, in which the means for loading said files to the target server according to a predetermined format use a standard transfer protocol, such as the secured HTTPS protocol.

16. Device (10, 10a, 17) according to anyone of claims 11 to 15, comprising means for transmitting to the target server an address at which at least one of said files is available, replacing the means for loading said file.

17. Computer program product to be installed on a device, comprising instructions for implementing the following step, on execution of the program by a processing unit of said device:
- transmitting, from the client to the target server, a set of data (8) obtained from said files to be loaded, at least some (21, 22, 23, 24) of the data of said set being encoded;
said computer program product being **characterized in that** it comprises for implementing the following steps:
- requesting, from the client, an authenticity check, by the target server, on the data of said set from at least some (22, 23, 24) of said encoded data; and
- when the authenticity of the data of said set has been checked successfully by the target server, loading said files according to a predetermined format from the client to the target server.

18. Computer program product according to Claim 17, further comprising instructions for implementing a step for transmitting (28), to the target server, a request to install an application associated with said files.

19. Computer program product according to Claim 17 or 18, further comprising instructions for implementing a file load to avionics type servers (15-16).

20. Computer program product according to anyone of claims 17 to 19, in which said predetermined format according to which the files are loaded to the target server conforms to a protocol used by avionics type communication equipment, in particular the ARINC 665 protocol.

21. Computer program product according to anyone of claims 17 to 20, in which the loading of said files to the target server according to a predetermined format uses a standard transfer protocol, such as the secured HTTPS protocol.

22. Computer program product according to anyone of claims 17 to 21, in which the target server is sent an address at which at least one of said files is available, instead of loading said file.
